# EUROPÄISCHE PATENTSCHRIFT

(11) **EP 2 176 858 B1**
(45) Veröffentlichungstag und Bekanntmachung des Hinweises auf die Patenterteilung: **23.03.2016**
(21) Anmeldenummer: 08761127.3
(22) Anmeldetag: 18.06.2008
(51) Int. Cl.: G10L 15/26, G10L 15/14

(54) **VERFAHREN ZUR SPRACHERKENNUNG**
METHOD FOR VOICE RECOGNITION
PROCÉDÉ DE RECONNAISSANCE VOCALE

(30) Priorität: 18.07.2007 DE 102007033472
(43) Veröffentlichungstag der Anmeldung: 21.04.2010
(73) Patentinhaber: Svox AG, 8048 Zürich (CH)
(72) Erfinder: WANDINGER, Michael, 85540 Salmdorf (DE); GUITARTE PEREZ, Jesus Fernando, 81739 München (DE); LITTEL, Bernhard, 81547 München (DE)
(74) Vertreter: PATWIL AG
(86) Internationale Anmeldenummer: PCT/EP2008/057646
(87) Internationale Veröffentlichungsnummer: WO 2009/010358

(56) Entgegenhaltungen:
- EP-A- 1 793 371
- CA-A1- 2 372 676
- DE-A1- 10 207 895

## Beschreibung

Die vorliegende Erfindung betrifft ein Verfahren zur Spracherkennung an Äußerungen mit mehreren Äußerungsteilen. Die Erfindung betrifft ferner eine Spracherkennungsvorrichtung, welche zur Durchführung eines entsprechenden Verfahrens geeignet ist sowie ein Computerprogrammprodukt, welches die Durchführung eines Spracherkennungsverfahrens auf einer programmgesteuerten Spracherkennungsvorrichtung veranlasst.

Verfahren zur Spracherkennung als Ergänzung für Mensch-Maschine-Schnittstellen finden immer breitere Anwendungsfelder. Die Befehlserkennung oder Auswahl von Einträgen aus Adressbüchern bei mobilen Endgeräten, wie beispielsweise Mobiltelefonen, ist mittlerweile ein Standardfunktionsumfang. Insbesondere auch bei Kraftfahrzeugen werden Spracherkennungssysteme eingesetzt, um z. B. Start- und Zielvorgaben für Navigationseinrichtungen zu erfassen.

Gebräuchliche Spracherkennungsverfahren basieren zum Beispiel auf sogenannten Hidden-Markov-Modellen, die zwar eine sprecherunabhängige Spracherkennung ermöglichen, jedoch einen hohen Rechenaufwand bedingen. Da insbesondere bei Kraftfahrzeugen häufig sogenannte eingebettete Systeme bzw. Embedded Systems als Rechner zum Einsatz gelangen, welche nur begrenzte Rechen- und Speicherressourcen aufweisen, müssen häufig vereinfachte Spracherkennungen durchgeführt werden. Insbesondere die Einschränkung des Suchraums für die zu identifizierenden Suchbegriffe führt in der Regel zu geringeren Anforderungen an die Rechenleistung und Speicherkapazitäten. Allerdings geht eine entsprechende Suchraumeinschränkung und damit Ersparnis an Ressourcen häufig einher mit einer weniger zuverlässigen Spracherkennung und/oder einer weniger komfortablen Bedienung durch den Nutzer.

In der DE 102 07 895 A1 ist z. B. ein Verfahren zur Spracherkennung beschrieben, bei dem eine stufenweise Spracherkennung für die Eingabe von mehrteiligen Äußerungen bzw. Befehlen vorgeschlagen wird. Dort ist vorgesehen, beispielsweise bei der Eingabe eines Städtenamens und darauffolgender Eingabe eines Straßennamens zunächst eine Spracherkennung für eine Einzeläußerung mit dem gesprochenen Straßennamen vorzunehmen, welche dem Benutzer auf einem Display als Trefferliste angezeigt wird. Nach Quittierung durch den Benutzer kann dann ein auf den Städtenamen abgestimmtes zweites Vokabular für eine weitere Spracherkennung bestimmt werden, welches einen geringeren Speicherbedarf bedingt als die Kombination von Städtenamen und Straßennamen. Nachteilig ergibt sich jedoch, dass der Benutzer zunächst das Erkennungsergebnis für den Städtenamen registrieren muss und manuell eine Auswahl aus der Trefferliste vornehmen muss.

Ein weiteres Verfahren zur Spracherkennung ist in EP 1 793 371 A2 offenbart, bei dem eine Datenbank Informationen über eine Vielzahl von Strassennamen enthält, wobei die Strassen jeweils durch einen Strassennamen und einen Strassentyp charakterisiert sind.

Ferner ist es besonders wünschenswert, eine vollständige Adresseingabe, welche z. B. den Städtenamen, den Straßennamen sowie eine Hausnummer umfasst, in einem einzigen für den Nutzer wahrnehmbaren Schritt mittels einer Spracherkennung zu erkennen und dem Benutzer direkt eine Auswahl von kompletten Zieladressen anzuzeigen. Üblicherweise geht eine entsprechende Verlängerung der zu erkennenden Äußerung wegen der vielen Äußerungsteile (Städtenamen, Straßennamen, Hausnummer) mit erheblich höheren Forderungen an Speicher- und Rechenleistungen der entsprechenden Spracherkennungsvorrichtung einher. In der Vergangenheit wurden deshalb möglichst nur kurze Befehle oder Befehlssequenzen durch eine Spracherkennung erkannt und dem Nutzer dargestellt.

Es ist daher eine Aufgabe der vorliegenden Erfindung, ein verbessertes Verfahren zur Spracherkennung bereitzustellen.

Diese Aufgabe wird durch ein Verfahren zur Spracherkennung gemäß Patentanspruch 1 gelöst.

Weitere Ausführungsformen finden sich in den unabhängigen Ansprüchen 16, 21 und 22.

Demgemäß ist ein Verfahren zur Spracherkennung einer zu erkennenden Äußerung mit mehreren zu erkennenden Äußerungsteilen vorgesehen. Dabei wird zunächst lediglich eine Teilspracherkennung an einem ersten ausgewählten Äußerungsteil durchgeführt und in Abhängigkeit von einer durch die Teilspracherkennung erkannten Auswahl von Treffern für den ersten Äußerungsteil eine Gesamtspracherkennung an dem ersten und weiteren Äußerungsteilen der gesamten Äußerung durchgeführt.

Obwohl die zu erkennende Äußerung mehrere verschiedene Äußerungsteile umfasst, wie beispielsweise der Ausspruch einer Zieladresse aus Städtenamen plus Straßennamen plus Hausnummer, ist es nicht notwendig, dass der Nutzer bestimmte Äußerungsteile oder erkannte Äußerungsteile quittiert. Da zunächst ein Äußerungsteil aus der gesamten Äußerung ausgewählt wird, kann kontextabhängig ein kleineres Vokabular für die Teilspracherkennung, beispielsweise im Wesentlichen auf Städtenamen bezogen, verwendet werden. Der entsprechende Kontext ergibt sich aus dem für den Nutzer nicht wahrnehmbaren Zwischenergebnis der ersten Teilspracherkennung. Die erkannte Auswahl von Treffern durch die Teilspracherkennung ermöglicht es zum Beispiel, die gesamte Äußerung erneut einer Spracherkennung zu unterziehen, welche ein gegenüber allen möglichen Kombinationen aus Städtenamen, Straßennamen und Hausnummern wegen der Vorauswahl durch die Teilspracherkennung ein erheblich reduziertes Vokabular benötigt. Damit geht auch eine geringere Anforderung an Speicher- und Rechenkapazität einher.

Bei dem Verfahren wird der erste Äußerungsteil einer Teilspracherkennung anhand eines Hidden-Markov-Modells unterzogen. Dabei werden die übrigen Äußerungsteile für die Teilspracherkennung mit Fülldaten überdeckt. Diese Fülldaten, welche auch als Mülldaten oder Garbage-Daten bezeichnet werden, bedingen nur einen geringen Speicher- und Rechenbedarf für die Erzeugung eines entsprechenden Vokabulars gemäß einem Hidden-Markov-Modell. Falls beispielsweise eine zu erkennende Teiläußerung am Beginn der Äußerung steht, wie es bei der Eingabe einer Adresse durch den Städtenamen der Fall ist, kann eine bestimmte Anzahl von zeitlich ersten erfassten Phonemen im Rahmen eines Hidden-Markov-Modells mit bekannten Städtenamen einer Datenbank trainiert werden, während die weiteren erfassten Äußerungsteile mit Müll oder Füllphonemen trainiert werden. Im zweiten Spracherkennungsschritt können die im ersten Teilspracherkennungsschritt mit Fülldaten belegten Äußerungsteile durch Suchworte aus dem Suchwortschatz, beispielsweise Straßennamen, ersetzt werden. In dem zweiten Spracherkennungsschritt, in dem die gesamte Äußerung einer Spracherkennung unterzogen wird, kann das Vokabular daher bereits erheblich eingeschränkt werden, da nur zu der Auswahl von Treffern für den ersten mittels der Teilspracherkennung erkannten Äußerungsteil konsistente potenzielle Suchbegriffe durch das Hidden-Markov-Modell modelliert werden müssen. Prinzipiell spielt es dabei keine Rolle an welcher zeitlichen Position der erste Äußerungsteil vorliegt, welcher der ersten Spracherkennungsstufe zugrunde gelegt wird. Auch eine Äußerung, bei der der erste zu erkennende Äußerungsteil von anderen Äußerungsteilen umgeben ist, kann durch ein Erfindungsgemäßes Spracherkennungsverfahren verarbeitet werden.

Es ist ferner möglich, den ersten Äußerungsteil durch eine Bestimmung des zeitlichen Energieverlaufs der gesamten Äußerung zu erkennen und der Teilspracherkennung zu unterziehen. In der Regel sind die Äußerungsteile durch detektierbare Sprechpausen voneinander trennbar, sodass eine besonders niedrige Energie zu bestimmten Zeitpunkten der Äußerung als Indikator für Zwischenräume zwischen Äußerungsteilen dienen kann. Es können auch bekannte Verfahren der Sprachaktivitätserkennung zur Ermittlung des ersten Äußerungsteils in der Äußerung verwendet werden.

Vorzugsweise umfasst das Verfahren zur Spracherkennung einen oder mehrerer der folgenden Verfahrensschritte:
- Aufnehmen einer Äußerung, welche mehrere Äußerungsteile umfasst;
- Bereitstellen eines ersten Vokabulars, welches eine erste Liste von Suchworten, Phonemkombinationen und/oder Übergangswahrscheinlichkeiten umfasst;
- Durchführen einer Teilspracherkennung für den ausgewählten ersten Äußerungsteil der aufgenommenen Äußerung mittels dem bereitgestellten ersten Vokabular zum Bestimmen einer Auswahl von Treffern aus der Liste von Suchworten;
- Bereitstellen eines zweiten Vokabulars, in Abhängigkeit von der Auswahl von Treffern, wobei das zweite Vokabular eine Liste von Suchwortkombinationen von mehreren Suchworten, Phonemkombinationen und/oder Übergangswahrscheinlichkeiten umfasst; und
- Durchführen einer Spracherkennung für die aufgenommene Äußerung mittels dem zweiten Vokabular zum Bestimmen einer Auswahl von Treffern aus der Liste von Suchwortkombinationen.

Das Aufnehmen der Äußerung kann beispielsweise durch ein Mikrophon und einen nachgeschalteten Analog-/Digitalwandler erfolgen, welcher die digitale Äußerung weiteren Recheneinheiten, beispielsweise einer CPU in einem Embedded System, bereitstellt. Das erste Vokabular wird z. B. durch eine Steuer- oder Recheneinrichtung, welche auf eine Datenbank mit Suchworten und entsprechenden Phonemtranskriptionen der Suchworte zugreift, erzeugt werden. Die Bereitstellung eines Spracherkennungsvokabulars erfordert üblicherweise eine hohe Rechenleistung und/oder umfangreichen Speicherplatz zum Zwischenspeichern des für eine Spracherkennung, welche beispielsweise softwareimplementiert vorliegt.

Bei dem zweiten Spracherkennungsschritt, welcher entgegen dem Stand der Technik nicht durch eine Verifizierung oder Quittierung durch den Benutzer initiiert wird, werden weitere Informationen zu den Treffern aus der Teilspracherkennung einem zweiten Vokabular hinzugefügt. Dies kann z. B. die Erzeugung eines Vokabulars umfassen, welches den erkannten besten Städtenamen aus dem Teilerkennungsschritt entsprechende konsistente Straßennamen zufügt.

Es ist z. B. denkbar, dass eine Datenbank vorliegt, welche alle Städtenamen eines Landes umfasst sowie alle Straßennamen und die zugehörigen Hausnummern. Das erste für die Teilspracherkennung notwendige Vokabular müsste neben Fülldaten lediglich auf die Städte- oder Ortsnamen als Oberbegriff zugreifen. Als weitere Begriffe in dem zweiten Spracherkennungsschritt werden dann als Unterbegriffe Straßennamen und Hausnummern zugefügt. Allerdings sind nicht alle der Datenbank entnehmbare Straßennamen für die Spracherkennung relevant, sondern lediglich diejenigen, welche den Städtenamen als Oberbegriffe zugeordnet sind und welche als Treffer von der Teilspracherkennung identifiziert wurden.

Vorteilhafterweise wird bei einer Variante des erfindungsgemäßen Verfahrens zur Spracherkennung das erste Vokabular aus dem Speicher gelöscht, bevor das zweite Vokabular eingelesen wird. Es wird somit eine effiziente Speichernutzung insbesondere bei Embedded Systems gewährleistet.

Um die Ressourcen eines entsprechenden Spracherkennungssystems effizienter zu nutzen, sieht eine weitere Variante des Spracherkennungsverfahrens vor, dass bei der zunächst durchgeführten Teilspracherkennung ermittelte Eigenschaften der Äußerung und/oder des Äußerungsteils bei der Spracherkennung der weiteren Äußerungsteile und/oder der gesamten Äußerung wiederverwendet werden.

Insbesondere kommen bei der Teilspracherkennung oder Vokabularerzeugung berechnete MFCC-Merkmale und/oder Emissionswahrscheinlichkeiten in Frage. Unter MFCC (= Mel Frequency Cepstral Coefficients) werden berechenbare Merkmale von erfassten Audioäußerungen verstanden. Die Bestimmung von MFCCs erfolgt nach allgemein bekannten Verfahren, welche von einer entsprechenden programmierten CPU des Spracherkennungssystems vollzogen werden können. Eine Wiederverwendung in dem zweiten Spracherkennungsschritt an der gesamten Äußerung z. B. reduziert damit den Rechenaufwand der Spracherkennung. Ebenso können Varianten oder Derivate der MFCCs verwendet werden.

Die Erfindung schafft ferner eine Spracherkennungsvorrichtung mit den Merkmalen des Patentanspruchs 16.

Die Spracherkennungsvorrichtung weist vorzugsweise eine Steuereinrichtung und eine Speichereinrichtung auf, welche an eine Datenbankeinrichtung gekoppelt sind. Dabei stellt die Datenbankeinrichtung Suchworte eines Vokabulars und/oder eine phonemische Transkription der Suchworte bereit. Die Datenbankeinrichtung kann z. B. als Wechseldatenträger ausgestaltet sein, wie z. B. eine DVD, SD-Speicherkarte, ein USB-Stick, eine CD-ROM oder weitere bekannte Speichermittel. Entsprechende Datenbanken für Navigationssysteme oder andere Spracherkennungsanwendungen werden z. B. in einem SAMPA-Format vertrieben. Dabei steht SAMPA für Speech Assessment Method Phonetic Alphabet. Dies entspricht einem phonetischen Alphabet, welches eine maschinenlesbare Codierung als ASCII-Symbole von phonetischen Alphabeten darstellt.

Ferner liefert die Erfindung ein Computerprogrammprodukt, welches die Durchführung eines vorgenannten Verfahrens zur Spracherkennung auf einer programmgesteuerten Spracherkennungsvorrichtung veranlasst. Dabei ist eine Realisierung des Computerprogrammprodukts beispielsweise in Form eines auf einem computerlesbaren Datenträger abgespeicherten Computerprogramms denkbar. Z. B. kommen CD-ROMs, Floppy-Disks, DVDs, USB-Sticks, Speicherkarten oder weitere Speichermittel in Frage sowie auch die Bereitstellung als herunterladbare Datei von einem Server.

Weitere vorteilhafte Ausgestaltungen der Erfindung und Weiterbildungen sind Gegenstand der Unteransprüche sowie der im Folgenden beschriebenen Ausführungsbeispiele. Im Weiteren wird die Erfindung anhand von Ausführungsbeispielen unter Bezugnahme auf die beigelegten Figuren näher erläutert. Es zeigt dabei:
- Figur 1: ein schematisches Blockdiagramm einer Spracherkennungsvorrichtung;
- Figur 2: ein Ablaufdiagramm einer ersten Variante des Verfahrens zur Spracherkennung;
- Figur 3: ein Ablaufdiagramm einer zweiten Variante des Verfahrens zur Spracherkennung;
- Figur 4: eine schematische Darstellung einer mehrteiligen Äußerung;
- Figur 5: schematisch eine hierarchische Struktur einer Suchwortdatenbank;
- Figur 6a, 6b: ein Beispiel für ein zeitliches Ablaufdiagramm in einer Spracherkennungsvorrichtung bei der Durchführung eines Verfahrens zur Spracherkennung.

In den Ausführungen sind gleiche bzw. funktionsgleiche Elemente mit denselben Bezugszeichen versehen worden, sofern nichts anderes angegeben ist.

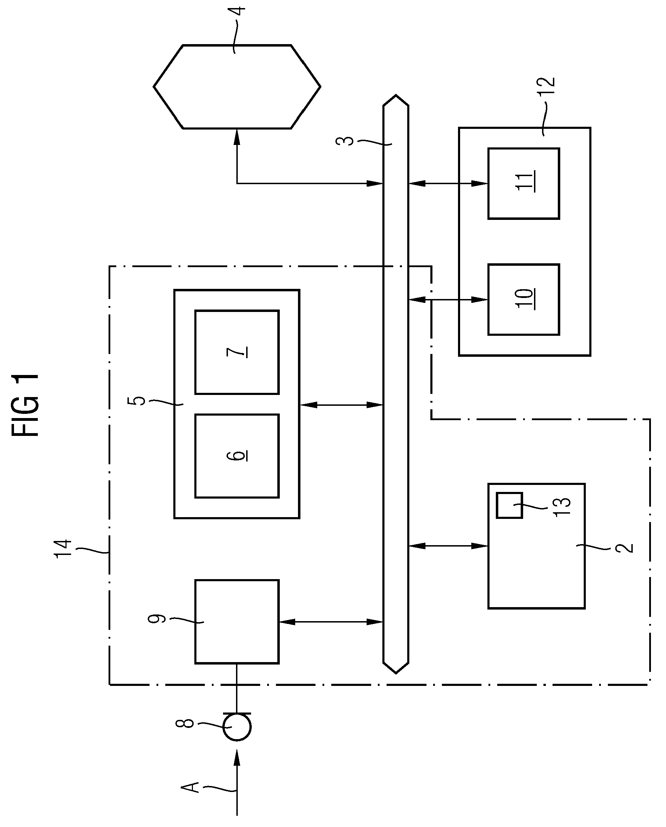

Die Figur 1 zeigt ein schematisches Blockdiagramm einer Spracherkennungsvorrichtung 1. Die Spracherkennungsvorrichtung 1 kann z.B. als ein Embedded System für eine Automobilanwendung z. B. für ein Navigationssystem ausgeführt sein. Es ist eine Steuereinrichtung 2, beispielsweise ein Mikroprozessor oder eine CPU vorgesehen, welche vorzugsweise programmierbar ist und einen internen Speicher, zum Beispiel einen Pufferspeicher 13 aufweist. Ferner ist eine Speichereinrichtung 5 vorgesehen, welche z. B. einen RAM-Speicher 6 und einen ROM-Speicher 7 aufweist. Der ROM-Speicher kann z. B. das Betriebssystem oder Steuerprogramme für die CPU 2 aufweisen.

Speicher 5 und CPU 2 sind miteinander gekoppelt, was in der Figur 1 als Kommunikations- und Datenbus 3 dargestellt ist. Es ist dabei denkbar, dass die Datenbank 4 beispielsweise im Kofferraum eines Fahrzeuges untergebracht ist und eine Datenkommunikation zwischen der CPU 2 und der Datenbank 4 über ein Fahrzeugbussystem, wie z. B. dem I2C-Bus erfolgt. Es ist auch denkbar, dass bestimmte Datensätze in der Datenbank 4 zum Bilden eines Spracherkennungsvokabulars vorübergehend in dem RAM-Speicher 6 der Speichereinrichtung 5 übertragen wird.

An dem Kommunikations- und Datenbus 3 ist ferner ein Analog-/Digitalwandler 9 gekoppelt, an dem ein Mikrophon 8 angeschlossen ist. Eine Äußerung A wird somit vom Mikrophon 8 aufgenommen und vom Analog-/Digitalwandler 9 digitalisiert bereitgestellt. Die Steuereinrichtung bzw. CPU 2 koordiniert die Ablage im Speicher 5. Ferner kann die Spracherkennungsvorrichtung 1 eine Eingabeeinrichtung 10 und Ausgabeeinrichtung 11 aufweisen. Dies ist z. B. in der Implementierung eines GUI (Graphic User Interface) verwirklicht. Als Eingabeeinrichtung kommt zum Beispiel eine Tastatur, ein Drehknopf oder sonstige haptische Eingabemittel in Frage. Als Ausgabeeinrichtung 11 ist z. B. ein Display oder aber auch eine Sprachausgabe möglich.

Insbesondere die CPU 2, der Speicher 5 und der Analog-/Digitalwandler 9 zusammen mit einem geeigneten Datenkommunikationsbus 3 werden häufig als Embedded Systems implementiert. Dabei ist ein möglichst geringer Herstellungs- und Platzaufwand gewünscht, sodass eine entsprechende CPU oder Mikroprozessor üblicherweise mit einer Taktfrequenz von 300 bis 600 MHz betrieben wird. Denkbar sind jedoch auch andere Werte. Als RAM-Speicher 6 müssen häufig 64 bis 128 MB-Speicherelemente ausreichen. Diesen begrenzten Ressourcen hinsichtlich der Rechenkapazität der CPU 2 und der Speicherressourcen 5 bedingen ein besonders ressourcensparendes Verfahren zur Spracherkennung.

Ein sequenzielles Eingeben und Quittieren von einzelnen Äußerungsteilen, wie z. B. zunächst die Stadt, und nach einer weiteren Eingabeaufforderung eine Adresse in Form des Straßennamens und der Hausnummer, ist jedoch umständlich, obwohl dadurch die Größe des zu verwendenden Vokabulars bei der Spracherkennung begrenzt werden kann.

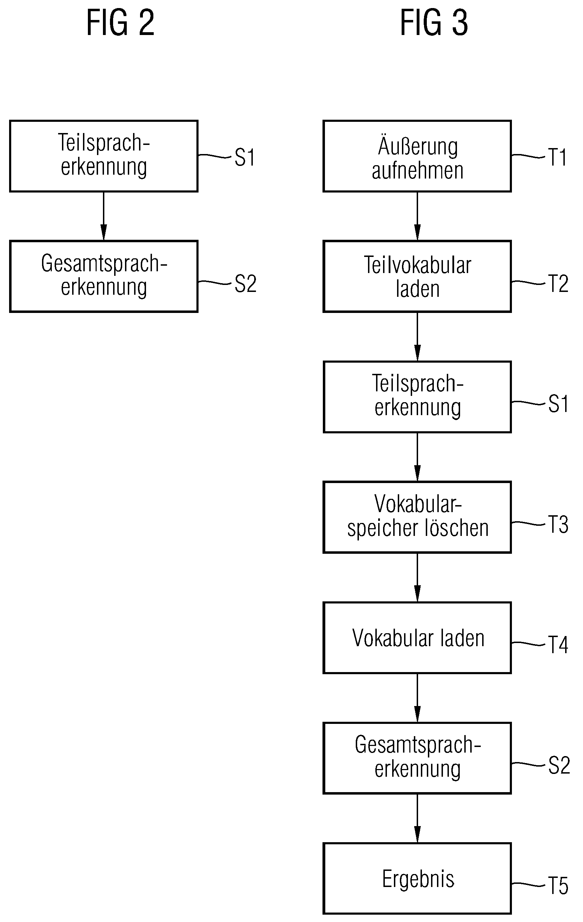

In der Figur 2 ist ein schematisches Ablaufdiagramm für ein verbessertes Verfahren zur Spracherkennung für mehrteilige Äußerungen schematisch dargestellt. Es ist dabei ein zweistufiges Verfahren illustriert, bei dem zunächst eine Teilspracherkennung im Schritt S1 oder in der Erkennungsstufe S1 erfolgt und anschließend eine Gesamtspracherkennung in der Folgestufe S2 durchgeführt wird.

Im ersten Schritt S1 wird die Erkennung auf einen Äußerungsteil der Gesamtäußerung beschränkt und die übrigen Äußerungsteile z. B. durch Müllmodelle oder Fülldaten überdeckt. Am Beispiel des Eingebens einer Zieladresse für ein Navigationssystem werden im ersten Erkennungsschritt S1 über eine Teilspracherkennung nur die Städtenamen im aktiven Vokabular gehalten. Die Straßennamen und Hausnummern werden durch Müllmodelle oder Füllphoneme modelliert. Dies kann z. B. im Rahmen eines Hidden-Markov-Modells erfolgen.

Bei einem Hidden-Markov-Modell (HMM) zur Spracherkennung werden Übergangswahrscheinlichkeiten von einem Phonem zum nächsten in einer Abfolge von Phonemen betrachtet. Phoneme sind die kleinsten bedeutungsunterscheidenden Einheiten eines Sprachsystems. Ein Hidden-Markov-Modell ist dabei durch die Parameter λ = (A, B, n) charakterisiert, wobei A = {aij} die Übergangswahrscheinlichkeiten von einem (verborgenen) Zustand i zum Zustand j, n = {nᵢ} die Startwahrscheinlichkeiten für den Zustand i und B = {bᵢ} die Wahrscheinlichkeiten für eine Beobachtung i, wobei ein jeweiliger Zustand i eine Beobachtung Oₜ zum Zeitpunkt t emittiert. Bei dem Hidden-Markov-Spracherkennungsmodell wird eine Sequenz von Phonemen aufgezeichnet und die Wahrscheinlichkeit bestimmt, mit der gemäß eines HMMs der aufgenommene Phonemverlauf erzeugt werden kann. Jedes HMM entspricht dabei beispielsweise einer Klasse, sodass durch Auswahl der höchsten Wahrscheinlichkeit die aufgenommene Phonemsequenz einer Klasse bzw. einem Wort oder Wortfolge zugeordnet werden kann.

Mittels bekannter Hidden-Markov-Technologie lassen sich sprecherunabhängige Spracherkennungen realisieren. Dazu werden Hidden-Markov-Modelle für die Phoneme einer Sprache trainiert. Es werden dabei in der Regel große in der Umgebung für die Spracherkennung aufgenommene Suchworte, welche in Datenbanken aufgenommen werden, verwendet. Entsprechende Datenbanken weisen die Suchworte, wie die Städtenamen und eine Transkription in Phoneme auf. Bekannt sind z. B. SAMPA-Transkriptionen. Bei üblichen Spracherkennungsalgorithmen werden die Phoneme dann kontextabhängig, z. B. über Triphone, modelliert. Das aktuelle Phonem wird dabei abhängig von den Vorgänger- und Nachfolger-Phonemen unterschiedlich modelliert.

Üblicherweise wird das Vokabular für einen Spracherkennungsalgorithmus oder eine entsprechend eingerichtete Spracherkennungseinrichtung, wie es beispielsweise in der Figur 1 eine durch ein Betriebssystem oder ein Steuerprogramm eingerichtete CPU 2 ist, dynamisch generiert. Dazu ist zunächst notwendig, die Phonemabfolge der zu erkennenden Suchworte anzugeben und in eine für die Spracherkennung verständliche Form zu kompilieren. D. h., die aus der Datenbank 4 entnommenen Phonemsequenzen der Suchworte werden in Zustandsfolgen umgewandelt. Je größer dabei die Anzahl der Suchworte ist desto mehr Rechenaufwand ist bei der Vokabularerzeugung z. B. durch die CPU 2 zu vollziehen. Für die erste Spracherkennungsstufe, also der Schritt S1 der Teilspracherkennung, wird dies nur für beispielsweise die in Deutschland vorliegenden Städtenamen durchgeführt. Dies sind etwa 70.000 Suchworte. Für die Gesamtspracherkennung in der zweiten Stufe bzw. im Schritt S₂ wird erneut ein Erkennungsvokabular erzeugt, welches jedoch bei dem Beispiel der Zieladresseingabe nicht mehr alle möglichen Straßennamen und Städtenamen sowie Hausnummern umfassen muss, sondern deutlich reduziert ist. In Deutschland existieren etwa 370.000 Straßennamen. Die erste Erkennungsstufe durch die Teilspracherkennung eines Straßennamens reduziert jedoch diese Anzahl von 370.000 Suchworten auf nur noch 200 bis 15.000 Worte. Werden beispielsweise N Treffer im ersten Schritt S1 ermittelt, wird im zweiten Schritt nur noch ein Vokabular für die Durchführung einer Spracherkennung zusammengestellt, welches die für die N Trefferstädtenamen relevanten Straßennamen umfasst. Bei durchschnittlich 30 Straßen pro Städtenamen ergeben sich bei N = 10 Treffern für die Städte Vokabulare zwischen 200 bis 15.000 Worten. Dabei wird Berlin als größte Stadt mit 13.000 Straßen berücksichtigt.

Beim zweiten Spracherkennungsschritt S2 für die Gesamtspracherkennung der erfassten Äußerung mit mehreren Äußerungsteilen ist demnach in der Regel ein kleineres Vokabular notwendig als im ersten Teilspracherkennungsschritt S1, da im zweiten Schritt S2 nur noch die N besten Städtenamen berücksichtigt werden. Darüber hinaus lassen sich weitere logische Verknüpfungen zwischen Städtenamen und zugehörigen Straßennamen in einer Grammatik berücksichtigen. Es ist z. B. möglich, dass in verschiedenen Städten, die verschiedene Städtenamen aufweisen, zwar dieselben Straßennamen existieren, aber eine unterschiedliche Anzahl von Hausnummern vorliegt. Derartige logische Verknüpfungen lassen sich in einer Grammatik für die Spracherkennung implementieren.

Um die Erzeugung von Erkennervokabularen weiter zu verbessern, ist es möglich, dass Straßenvokabulare für Städtenamen, die eine besonders große Anzahl von Straßennamen zugeordnet haben bereits vorkompiliert und zwischengespeichert werden. Städte, die nur eine geringe Anzahl von Straßen, beispielsweise weniger als ein vorgebbarer Schwellwert aufweisen, haben in der Regel kleinere Straßenvokabulare, die auch online im Betrieb der Spracherkennung erzeugt werden können. Bei vorkompilierten Straßenvokabularen ist jedoch ein schnellerer Zugriff seitens der CPU möglich. Ferner wird dadurch der Speicherbedarf des entsprechenden Spracherkennungssystems reduziert, da nur die besonders großen Vokabulare gespeichert werden, die kleineren allerdings direkt online durch Abfrage Der Phoneme aus der Datenbank erzeugt werden.

In der Figur 3 ist eine Variante eines zweistufigen Verfahrens zur Spracherkennung dargestellt. In einem ersten Schritt T1 wird die Äußerung aufgenommen. Dies kann z. B. im Rückgriff auf die in der Figur 1 dargestellte Spracherkennungsvorrichtung durch das Mikrophon 8 mit dem Analog-/Digitalwandler 9 erfolgen. Die entsprechenden Daten können digital im Speicher 5 und dabei vorzugsweise im RAM-Speicher 6 abgelegt werden. Die Speichervorgänge können dabei von der CPU 2, welche programmierbar ausgestaltet ist und von einem Betriebssystem im ROM-Speicher 7 gesteuert ist, koordiniert werden.

Im Folgeschritt T2 wird ein Teilvokabular geladen bzw. online erzeugt. Dazu werden die Suchworte, beispielsweise Städtenamen und deren entsprechende Phonemtranskription von der Datenbank 4 geladen und im Speicher 6 abgelegt. Anschließend wird ein entsprechendes Teilvokabular für die Durchführung der eigentlichen Spracherkennung bzw. Teilspracherkennung im Schritt S1 erzeugt.

Wie bereits eingangs erläutert wurde, können bei der Durchführung des Spracherkennungsalgorithmus, beispielsweise mittels einem HMM-Modell die Äußerungsteile mit Fülldaten abgedeckt werden, an denen voraussichtlich die zunächst nicht relevanten Straßennamen und Hausnummern vorliegen.

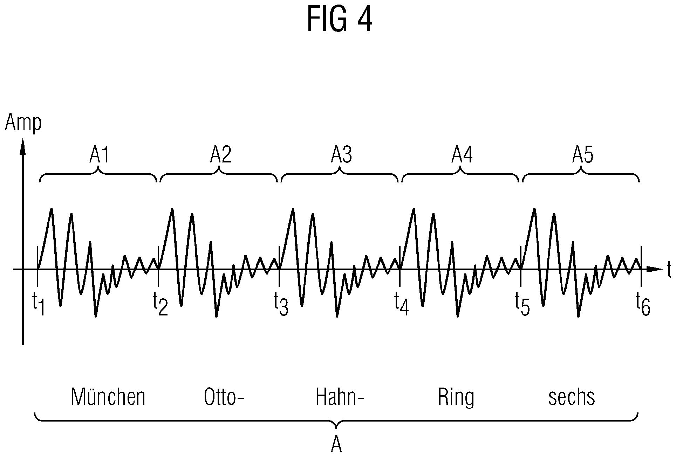

In der Figur 4 ist schematisch eine Äußerung A mit verschiedenen Äußerungsteilen A1-A5 dargestellt. Die graphische Darstellung zeigt die Amplitude der vom Mikrophon aufgenommenen Schallwellen über die Zeit t. Der Nutzer gibt beispielsweise den vollständigen Suchbegriff "München Otto-Hahn-Ring Sechs" ein. Diese Adressangabe kann als fünfteilige Äußerung A aufgefasst werden. Dabei entspricht der Städtename "München" einem ersten Äußerungsteil A1, "Otto" einem zweiten Äußerungsteil A2, "Hahn" einem dritten Äußerungsteil A3, "Ring" einem vierten Äußerungsteil A4 und die Hausnummer "Sechs" einem fünften Äußerungsteil A5. Dabei dauert die sprachliche Ausgabe von "München" vom Zeitpunkt t₁ bis zum Zeitpunkt t₂, "Otto" vom Zeitpunkt t₂ bis t₃, "Hahn" vom Zeitpunkt t₃ bis t₄, "Ring" vom Zeitpunkt t₄ bis t₅ und "Sechs" vom Zeitpunkt t₅ bis t₆.

Es gibt verschiedene Möglichkeiten, die Äußerungsteile zu identifizieren. Es kann z. B. ein HMM-Modell erzeugt werden, bei dem davon ausgegangen wird, dass der erste Äußerungsteil A1 einem Städtenamen entspricht und damit ein Oberbegriff für die übrigen Äußerungsteile, nämlich Straße und Hausnummer, darstellt. Es ist dabei z. B. möglich, sogenannte Garbage-Modelle zu erzeugen, die die Phoneme der Städtenamen in der Datenbank, beispielsweise "München" und weitere Fülldaten-Phoneme aufweist. Z. B. können verschiedene Pfade für die Spracherkennung modelliert werden:
<München><Müll><Müll><Müll><Müll><Müll><Müll>
<Münchlingen><Müll><Müll><Müll><Müll>
<Münchhausen><Müll><Müll>

In der vollständigen Phonemsequenz, die der Äußerung entspricht, also der Eingabe einer vollständigen Zieladresse in einem Satz und ohne Unterbrechungen werden die Phonemanteile mit Fülldaten überdeckt, die voraussichtlich keinem Städtenamen entsprechen. Dies kann in dem bezüglich der Figur 4 dargestellten Beispiel diejenigen Äußerungsteile sein, die einer vorgegebenen Anzahl von Anfangsphonemen folgen. Durch den Aufbau eines entsprechenden HMM-Modells für die Spracherkennung, bei dem nur die relevanten Äußerungsteile, also der erste Äußerungsteil A1, für den ersten Schritt relevant sind, berücksichtigt werden, kann ein viel kleineres Vokabular und damit ein geringerer Speicherplatz verwendet werden als für ein HMM-Modell, das alle Phoneme aller Äußerungsteile A1-A5 berücksichtigen muss.

Es ist auch denkbar, dass der Beginn und das Ende der verschiedenen Äußerungsteile A1-A5 durch eine Energiemessung der Äußerung zu bestimmen. Zwischen gesprochenen Worten tritt häufig eine Pause oder eine besonders geringe Energie des erzeugten Schalls auf. Dies ist in der Figur 4 insbesondere an den Zeitpunkten t₁, t₂, t₃, t₄, t₅ und t₆ der Fall. Die Bestimmung derartiger Minima kann somit dazu dienen, die Grenzen zwischen verschiedenen Äußerungsteilen zu bestimmen. Es sind jedoch auch weitere standardisierte Sprachaktivitätserkennungen bekannt. Zur Bestimmung von Wortgrenzen wird ein sogenanntes VAD (Voice Activity Detection)-Verfahren eingesetzt. Prinzipiell sind beliebige Methoden zur Bestimmung des jeweiligen Äußerungsteils für den ersten Spracherkennungsschritt S1 möglich.

Übliche Spracherkennungsverfahren weisen hintereinandergeschaltete Schritte wie Feature- oder Merkmalsberechnung, E-missionsberechnung und Suche auf. Bei der Merkmalsberechnung wird das erfasste Audiosignal in Merkmale umgewandelt, beispielsweise MFCC-Merkmale. Diese in der Regel standardisierten Merkmale können für die eigentliche Spracherkennung aus dem Audiosignal extrahiert werden. MFCCs können z. B. berechnet werden, indem das erfasste Audiosignal bzw. die erfasste Äußerung zunächst in Blöcke oder Fenster unterteilt wird. An jedem Fenster wird dann eine Fourier-Transformation durchgeführt und ein Betragspektrum erzeugt. Das Betragspektrum wird logarithmisiert, um die menschliche Gehörwahrnehmung nachzubilden. Die in der Regel hohe Anzahl von entstehenden Frequenzbändern wird auf wenige, z. B. 40, zusammengefasst. Anschließend wird eine diskrete Kosinustransformation durchgeführt oder Hauptkomponenten-Analyse gemacht. Die Berechnung von MFCCs ist allgemein bekannt.

Im folgenden Spracherkennungsschritt werden die berechneten Merkmale, beispielsweise MFCCs, mit den durch das HMM erzeugte Vektoren verglichen. Daraus ergibt sich ein Abstand oder ein Maß für die Abweichung von den Segmenten im HMM. Dies wird auch als Emission oder Emissionswahrscheinlichkeit bezeichnet. Das zugrundeliegende Vokabular für die Spracherkennung weist Zustandsfolgen auf, die eine Aneinanderreihung der Segmente aufweist. Im letzten Suchschritt wird, um ein Erkennungsergebnis oder ein Treffer aus dem Vokabular bzw. den Suchwortschatz zu ermitteln, eine Suche auf Basis der Emissionen des Erkennungsvokabulars und gegebenenfalls einer Grammatik oder einem Sprachmodell durchgeführt. Es ist z. B. eine Baumsuche möglich, aber auch andere Suchalgorithmen denkbar, um im Vokabular des HMM-Modells die erfasste Äußerung bzw. den erfassten Äußerungsteil zu identifizieren.

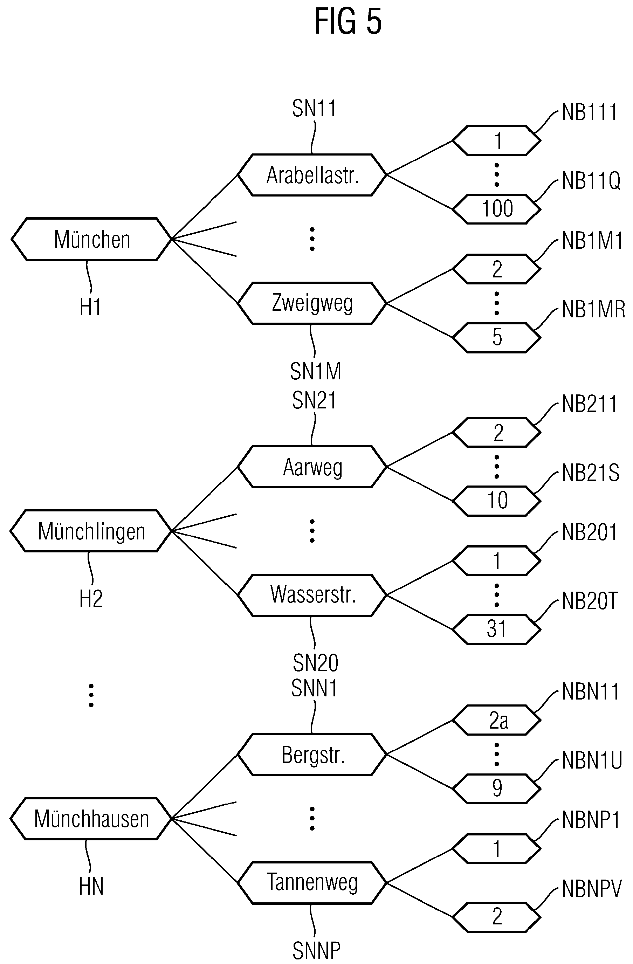

Die Teilspracherkennung im Schritt S1 liefert daher eine Trefferliste mit N Listenübereinstimmungen für den Städtenamen. In der Figur 5 ist dies auf der linken Seite dargestellt. Als mögliche Treffer ergibt die Teilspracherkennung z. B. "München" H1, "Münchlingen" H2 und weitere Einträge bis "Münchhausen" HN.

Bezugnehmend auf die Figur 3 kann im Schritt T3 nun das Vokabular aus dem Speicher gelöscht werden. Im Schritt T4 wird nun ein weiteres Vokabular für die zweite Stufe des Spracherkennungsverfahrens erzeugt und in den Speicher eingeschrieben. Das entsprechende Erkennervokabular wird erzeugt, indem die den Städtenamen der Treffer H1-HN zugehörigen Straßennamen ausgelesen werden.

In der mittleren Spalte der Figur 5 werden für den ersten Treffer München H1, M Straßennamen benötigt. In einer entsprechend hierarchisch organisierten Datenbank sind "München" H1 beispielsweise SN11-SN1M Einträge zugeordnet. Für den zweitbesten Treffer H2 "Münchlingen existieren in der Datenbank O Straßennamen SN21-SN2O. Für den N-ten Treffer HN "Münchhausen" liegen in der Datenbank SNN1-SNNP Einträge vor. Ferner sind, um eine vollständige Spracherkennung der Zieleingabe "München Otto-Hahn-Ring 6" zu erkennen, noch die Hausnummern der jeweiligen Straßennamen SN11-SN1M, SN21-SN2O und SNN1-SNNP notwendig. Dabei ist es nicht notwendig, für jeden Straßennamen die maximal mögliche Anzahl von Hausnummern für das Vokabular zu verwenden. Vielmehr kann berücksichtigt werden, dass beispielsweise die Arabellastraße SN11 in München 100 Hausnummern NB111-NB11Q mit Q = 100 aufweist. In einer anderen Stadt könnte eine andere Anzahl von Hausnummern möglich sein. Der Zweigweg SN1M in München H1 weist beispielsweise nur vier Hausnummern NB1M1-NB1MR mit R = 4 auf.

Analog wird das Vokabular für die Gesamtspracherkennung, also die gesamte Äußerung A nur mit Kombinationen von Suchworten, also Städtenamen, Straßennamen und Hausnummern zusammengestellt und kompiliert, wie dies in Abhängigkeit von dem ersten Teilspracherkennungsergebnis, also den Treffern H1-HN notwendig ist. Durch diese drastische Reduzierung des Erkennervokabulars für die Erkennung der gesamten Äußerungen A ist eine Implementierung mit oder auf ressourcenschwachen Rechnersystemen möglich. Zudem ist durch die Reduktion der zu übertragenden Daten zwischen der Datenbank 4 und dem Embedded System 14 auch die Transferzeit zur Initialisierung der Spracherkennung geringer.

Im folgenden Gesamtspracherkennungsschritt S2 wird dann beispielsweise über eine HMM-Spracherkennung ein entsprechendes Ergebnis mit Treffern erzielt. Dies wird im Schritt T5 z. B. dem Benutzer über eine Ausgabeeinrichtung, wie ein Display, eingezeigt. Durch den eingeschränkten Suchraum, also die speziell vorgegebenen reduzierten Vokabulare bei der Gesamtspracherkennung im Schritt S2 ist auch die Erkennungsrate besonders hoch, da unlogische oder nicht mögliche Kombinationen von Suchworten durch die spezielle Auswahl und Erzeugung des Erkennervokabulars in der zweiten Stufe ausgeschlossen oder zumindest unterdrückt werden.

Um die Rechenlast für die CPU 2 weiter zu reduzieren, kann ferner vorgesehen sein, dass bereits vorgenommene Berechnungen in der Teilspracherkennung des Schritts S1, beispielsweise die Bestimmung von Merkmalen wie MFCCs, wiederverwendet werden und in die Vokabularerzeugung und/oder Gesamtspracherkennung im Schritt S2 berücksichtigt werden. Die Merkmale oder Emissionswahrscheinlichkeiten aus dem ersten Teilspracherkennungsschritt S1 können zwischengespeichert werden und in dem zweiten Gesamtspracherkennungsschritt S2 wiederverwendet werden. Eine mehrfache Berechnung, die redundant wäre, wird dadurch verhindert.

Neben dem Beispiel einer Zieleingabe im Navigationssystem für ein Kraftfahrzeug sind auch andere Anwendungsmöglichkeiten denkbar. Es ist beispielsweise möglich, bei einem MP3-Player oder einer allgemeinen Audiowiedergabeeinrichtung, welche sprachgesteuert sein soll, den Benutzer den vollständigen Satz aus Künstler, Album und Titel sprechen zu lassen und zunächst eine Teilspracherkennung an dem Äußerungsteil, der den Künstler betrifft, durchgeführt wird. Im zweiten Spracherkennungsschritt ist dann ein deutlich verminderter Erkennervokabularumfang möglich. Der Nutzer muss in keinem Fall die Gesamtäußerung manuell in Einzelteile spalten oder einzelne Äußerungsteile quittieren. Das dargestellte Verfahren ermöglicht dabei eine besonders komfortable und benutzerfreundliche Spracherkennung bei viel- bzw. mehrteiligen Äußerungen, die zu erkennen sind.

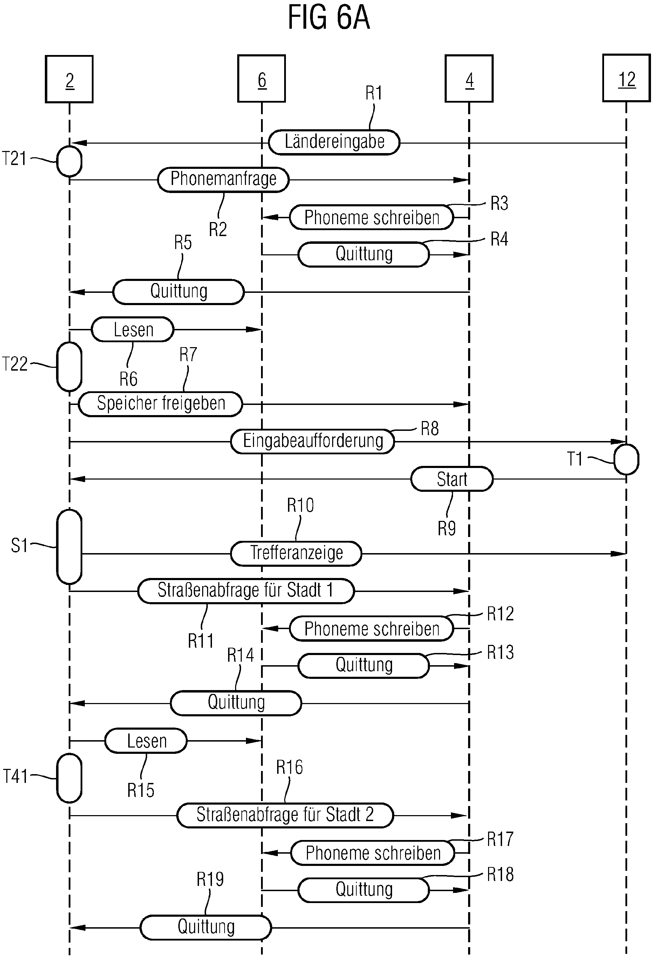

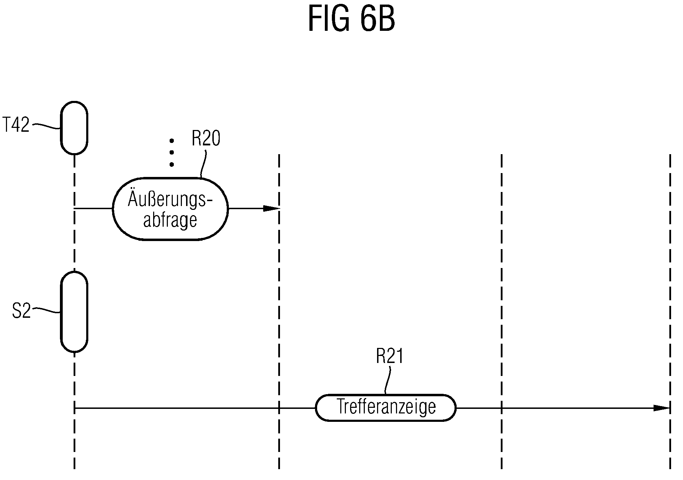

Die Figuren 6A und 6B zeigen ein mögliches zeitliches Ablaufdiagramm für ein zweistufiges Spracherkennungsverfahren nach einer Variante der Erfindung. Dabei verläuft die Zeitachse von oben nach unten, wobei die vier parallel gestrichelten Linien mit Aktionen bzw. Verfahrensschritten besetzt sind, die von verschiedenen Elementen oder Einrichtungen eines Spracherkennungssystems bzw. einer Spracherkennungsvorrichtung, wie sie beispielsweise in der Figur 1 dargestellt ist, durchgeführt werden.

Dazu ist eine Spracherkennungseinheit 2, die beispielsweise durch die CPU zusammen mit einer geeigneten Programmierung z. B. durch eine Spracherkennungssoftware im ROM-Speicher 7 realisiert werden kann, dargestellt. Der Einfachheit halber ist der Kasten mit dem Bezugszeichen 2 versehen. Die zweite vertikale gestrichelte Linie ist einem gemeinsam verwendeten Speicher, beispielsweise dem RAM-Speicher 6, zugeordnet. Die dritte vertikale gestrichelte Linie ist einer Einheit 4 zugeordnet, die entsprechende Phoneme für ein Vokabular für die Erkennereinrichtung oder Erkennersoftware bereitstellt. Dies kann z. B. direkt von der Datenbank 4 bereitgestellt werden oder aber mittels geeigneter Programmierung auch von der CPU über einen Programmteil, der einen sogenannten Phonem-Service bietet, geliefert werden. Die rechte vertikale gestrichelte Linie ist einer Ein-/Ausgabeeinrichtung 12 zugeordnet, beispielsweise einem GUI, das zum Beispiel als Touchscreen oder kombinierte Tastatur-Display-Einheit ausgeführt sein kann.

Das Spracherkennungsverfahren wird beispielsweise im Schritt R1 durch die Eingabe einer Länderkennzeichnung von dem Nutzer durch das GUI 12 gestartet. Die Eingabe wird der Erkennereinheit 2 übermittelt. Als Erkennereinheit wird im Folgenden zum Beipiel eine Programmteil verstanden, der eine Spracherkennungsfunktionalität auf einer programmierbaren Rechnereinrichtung, wie der CPU 2, realisiert. Die Erkennereinheit 2 beginnt dann im Schritt T21, ein entsprechendes erstes Vokabular für das entsprechende Land von der Datenbank bzw. dem Phonem-Service 4 abzufragen. In der ersten Stufe der Spracherkennung ist es notwendig, beim Beispiel bei der Zieleingabe für ein Navigationssystem, ein Teilvokabular für die Städtenamen zu erstellen, wobei, falls ein HMM-Modell für die Spracherkennung eingesetzt wird, die übrigen Äußerungsteile, also diejenigen, welche nicht den erwarteten Äußerungsteil, welcher den Städtenamen betrifft, entsprechen im Rahmen des HMM-Modells mit Mülldaten modelliert werden.

Die CPU bzw. Erkennereinheit 2 sendet eine entsprechende Phonem-Anfrage R2 an die Phonem-Datenbank 4 bzw. den Phonem-Service 4. Daraufhin erfolgt im Schritt R3 das Schreiben der notwendigen Phoneme und/oder weiterer Angaben, die für eine Spracherkennungssoftware notwendig sein können, in den gemeinsam genutzten Speicher 6 der Spracherkennungsvorrichtung 1. Der verwendete Speicherbereich ist gegenüber der vollständigen Datenbank 4 gering, da lediglich die Städtenamen, also ein Äußerungsteil, aktiv modelliert wird, während übrige Äußerungsteile der aufzunehmenden Äußerung im ersten Erkennungsschritt unwichtig sind. Nachdem der Speicher mit den notwendigen Phonemdaten beschrieben wurde, wird dies im Schritt R4 mit einem Quittungssignal oder Done-Befehl beendet. Der Phonem-Service 4 liefert ebenfalls ein Quittungssignal R5 an die Erkennereinheit, welche daraufhin im Folgeschritt R6 aus dem gemeinsam verwendeten Speicher 6 die vorliegenden Phonemdaten ausliest.

Die entsprechende Erkennersoftware oder Erkennereinrichtung 2 erstellt nun im Schritt T22 das erste Vokabular für die Durchführung der ersten Teilspracherkennung, z. B. für ein HMM-Modell mit Müll- oder Fülldaten für die nicht zu berücksichtigenden Äußerungsteile. Anschließend kann der Speicherbereich für die Phonemdaten im Schritt R7 freigegeben werden. Dies wird der Phonem-Serviceeinheit 4 mitgeteilt. Nach dem Schritt R4 ist die Teilspracherkennung vollständig vorbereitet.

Somit kann im Schritt R8 eine Eingabeaufforderung, z. B. über das GUI 12 dem Nutzer übermittelt werden. Eine Möglichkeit besteht darin, dass der Nutzer über ein Push-to-Talk die vollständige Zieladresse für das Navigationssystem ausspricht. Dies erfolgt im Schritt T1. Der Nutzer gibt dabei in einem vollständigen Satz die gesamte Zieladresse ein, ohne über das GUI weitere Eingaben vorzunehmen. Beim Push-to-Talk wird der Start der Spracheingabe durch ein Signal, beispielsweise einen Knopfdruck, durch den Nutzer der Erkennereinheit 2 signalisiert. Dadurch ist ein fest definierter Anfang der Äußerung, welche durch die Erkennereinheit bzw. Software zu erkennen ist, vorgegeben, was den Rechenaufwand erniedrigt, da kein Äußerungsanfang aufwändig bestimmt werden muss.

Somit beginnt im Schritt R9 die erste Teilspracherkennung zum Bestimmen einer Trefferliste aus dem Vokabular an Suchworten, welches in diesem Fall eine Liste von N Treffern mit den besten Städtenamen umfasst. Eine beispielhafte Liste mit ersten Treffern H1-HN ist in der Figur 5 dargestellt. Das Ergebnis dieser ersten Stufe der Spracherkennung im Schritt S1 kann optional auch im Schritt R10 von dem GUI angezeigt werden. Dies ist jedoch nicht zwingend notwendig, da die Spracherkennung selbsttätig in der zweiten Stufe auch die weiteren Äußerungsteile, also diejenigen, die Straßennamen und Hausnummern betreffen, berücksichtigt. Dazu muss zunächst ein erneutes Vokabular für die Spracherkennungseinheit 2 bereitgestellt werden.

Es erfolgt daher im Schritt R11 eine Abfrage der Phonemdaten für die Straßennamen und/oder Hausnummern, welche den ersten Treffer H1 der ersten Stufe der Spracherkennung betreffen. Die entsprechenden Phonemdaten werden im Schritt R12 in den gemeinsam genutzten Speicher 6 übertragen, was im Schritt R7 quittiert wird und im Schritt R14 der Erkennereinheit 2 mitgeteilt wird. Im Schritt R15 liest die Erkennereinheit 2 die entsprechenden Phonemdaten und erstellt im Schritt T41 das Vokabular für die zweite Stufe der Spracherkennung, die den ersten Treffer der ersten Stufe H1 betrifft.

Analog werden Abfragen für Straßennamendaten der weiteren Treffer, z. B. dem zweiten Treffer H2 im Schritt R16 von der Phonemdatenbank 4 abgefragt. Wiederum werden die entsprechenden Phonemdaten im Schritt R17 in den Speicher eingeschrieben, was im Schritt R18 quittiert wird, und im Schritt R19 von der Phonemdatenbank an die Erkennereinrichtung 2 mitgeteilt wird. Die Phonemdatenbank oder der Phonem-Service 4 bestätigt somit die erfolgreiche Übermittlung der angefragten Phonemdaten in den Speicher 6 der Erkennereinheit 2. Anhand der vorliegenden Phonemdaten und optionaler weiterer Daten, die für den Aufbau eines Vokabulars für die Erkennereinheit erforderlich sind, erstellt die Erkennereinheit im Schritt T42, dass Vokabular für die zweite Stufe der Spracherkennung, wie es z. B. in der Figur 5 anhand der Straßennamen SN21-SN2O und Hausnummern NB211-NB21S und NB2O1-NB2OT illustriert ist. Entsprechende Phonemdatenabfragen und Vokabularerstellungen erfolgen nun für alle Treffer der ersten Erkennungsstufe H1-HN. Mittels dem derart aufgebauten Erkennervokabular kann nun die zweite Stufe der Spracherkennung an der gesamten Äußerung erfolgen.

Die Äußerung kann z. B. ebenfalls im Speicher 6 digitalisiert abgelegt sein. Somit fragt die Erkennereinheit 2 die Äußerung im Schritt R20 ab und führt den zweiten Spracherkennungsschritt bzw. die zweite Spracherkennungsstufe S2 durch. Dies erfolgt mit dem Vokabular, welches abhängig von den Ergebnissen der ersten Erkennerstufe erzeugt wurde. Schließlich wird im Schritt R21 eine Trefferanzeige vorgenommen, welche z. B. bei dem in der Figur 4 dargestellten Äußerung die folgenden Möglichkeiten für Zieladressen umfassen kann:
München Otto-Hahn-Ring 6,
München Otto-Hahn-Ring 60,
München Otto-Hahn-Weg 6,
München Otto-Hahn-Ring 16.

Die vorbeschriebenen Varianten des Verfahrens zur Spracherkennung reduzieren das für die Erkennung, insbesondere mehrteilige Äußerungen, notwendige Vokabular. Damit sind auch essourcenschwache Embedded Systems in der Lage, sprecherunabhägige Spracherkennungen zu realisieren. Die Spracherkennung der komplexen Äußerung mit mehreren Äußerungsteilen wird in zwei oder optional auch mehreren Schritten durchgeführt. Abhängig vom Erkennungsergebnis des ersten Schrittes werden die Vokabulare der folgenden Schritte erstellt. Obwohl die Erfindung im Wesentlichen anhand von zwei Erkennungsstufen oder Erkennungsschritten erläutert wurde, ist eine Verallgemeinerung auf mehrere Schritte leicht möglich. Bei der Erkennung großer Wortschätze wird die Vokabulargröße für die einzelnen Schritte oder Erkennungsstufen jeweils deutlich reduziert.

Das mehrstufige Verfahren zur Spracherkennung hat ferner den Vorteil, dass eine reduzierte Ladezeit der jeweiligen Phonemdaten oder Vokabulardaten von einer Datenbank erfolgt. Konventionelle Erkenner, welche längere Äußerungen mit mehreren Äußerungsteilen einer Spracherkennung unterziehen, müssen das vollständige Vokabular mit seiner gesamten Komplexität am Anfang der Spracherkennung laden. Dies belastet den jeweiligen Daten- oder Kommunikationsbus und erfordert einen besonders großen Speicher. Durch die zwei- oder mehrstufige Spracherkennung gemäß der Varianten der Erfindung sind lediglich geringe Speicherplätze notwendig, und die Übertragung der jeweiligen Phonem- oder Vokabulardaten auf einem Datenbus ist reduziert.

Durch die Verwendung der ersten, beispielsweise N Treffer aus dem ersten Erkennungsschritt wird auch die Erkennungsrate gegenüber einer üblichen Strategie, bei der unabhängige Erkennungsverfahren für einen ersten Äußerungsteil und einen zweiten Äußerungsteil durchgeführt wird, verbessert. Dies kann insbesondere durch die Verwendung logischer Verknüpfungen oder Konsistenzüberprüfungen bei hierarchischen Datenbanken mit einem Oberbegriff, wie Städtenamen, und weiteren zugeordneten Begriffen, wie Straßennamen und Hausnummern, geschehen. Wenn in der ersten Erkennungsstufe, beispielsweise für N = 20 Treffer ermittelt werden, wobei die Äußerung "München Otto-Hahn-Ring 6" ist und "München" aufgrund beispielsweise der Störumstände nur achtzehnter Stelle erkannt wird, kann dennoch die Kombination "München Otto-Hahn-Ring 6" in der zweiten Stufe als bester Treffer auftreten, wenn an den übrigen Orten wie Münchlingen oder Münchhausen entweder kein Straßenname "Otto-Hahn-Ring" existiert oder nur andere Hausnummern vorliegen. Die Verknüpfung der ersten und zweiten Erkennungsstufe liefert damit eine besonders zuverlässige Spracherkennung von komplexen mehrteiligen Äußerungen.

Die vorbeschriebenen Verfahren bieten somit eine verbesserte Erkennungsrate im Vergleich zu üblichen Erkennungsverfahren. Es ist ein reduzierter Speicher- und Rechenbedarf erforderlich. Da die Vokabulare und Phonemdaten reduziert werden, ist der Datenbus mit geringerem Datentransfer belastet. Der Zugriff auf Phonemdaten und/oder Teilvokabulare ist schneller, da Teilvokabulare, beispielsweise Straßennamen-Vokabulare für besonders große Städte mit vielen Straßennamen zwischengespeichert werden können. Vokabularteile, die beispielsweise kleinen Städten entsprechen, mit wenigen Straßen können dynamisch online generiert werden und müssen nicht vorkompiliert werden. Durch die für den Benutzer einstufig wirkende Spracherkennung der komplexen Eingabeäußerung, welche zu erkennen ist, verringert sich die Eingabezeit der Zieladresse. Es sind keine mehrstufigen oder Quittiervorgänge durch den Nutzer notwendig.

Obwohl die vorliegende Erfindung anhand bevorzugter Ausführungsbeispiele und Varianten des Spracherkennungsverfahrens erläutert wurde, ist sie nicht darauf beschränkt, sondern vielfältig modifizierbar. Die vorbeschriebenen Beispiele anhand einer Zieleingabe für ein Navigationssystem ist abwandelbar. Zumindest immer dann, wenn eine mehrere Äußerungsteile umfassende Äußerung hierarchisch organisiert ist, d. h., wenn beispielsweise ein erster Äußerungsteil ein Oberbegriff für weitere Äußerungsteile darstellt kann die Erfindung eine Spracherkennung verbessern. Insofern lässt sich der in der Figur 5 dargestellte Verzweigungsbaum auf vielerlei Anwendungen beziehen, wie z. B. die erwähnte Suche von Musikstücken bei einem Musikabspielgerät, wobei als Oberbegriff z. B. der Interpret, als weiterer Begriff das Album und schließlich die Tracknummer oder Songnummer verwendet werden kann. Auch die Anzahl der Äußerungsteile und deren Anordnung in der Äußerung sind abwandelbar. Der erste zu erkennende Äußerungsteil kann z. B. auch am Ende der Gesamtäußerung vorliegen.

## Patentansprüche

1. Verfahren zur Spracherkennung einer ausgesprochenen, zu erkennenden Äußerung (A), welche mehrere zu erkennende Äußerungsteile (A1-A5) aufweist, wobei zunächst lediglich eine Teilspracherkennung (S1) anhand eines Hidden-Markov-Modells, bei dem die übrigen Äußerungsteile (A2-A5) für die Teilspracherkennung (S1) mit Fülldaten überdeckt werden, an einem ersten ausgewählten Äußerungsteil (A1) *mittels eines ersten Vokabulars mit einer Liste von Suchworten* erfolgt und in Abhängigkeit von einer durch die Teilspracherkennung (S1) erkannten Auswahl von *N besten* Treffern *aus der Liste von Suchworten* für den ersten Äußerungsteil (A1) eine Gesamtspracherkennung (S2) an dem ersten (A1) und weiteren Äußerungsteilen (A2-A5) der gesamten Äußerung (A) *mittels eines zweiten Vokabulars* durchgeführt wird, *wobei das zweite Vokabular, in Abhängigkeit von den N besten Treffern, eine Liste von Suchwortkombinationen umfasst*.

2. Verfahren nach Anspruch 1,
wobei der erste Äußerungsteil (A1) durch eine Bestimmung des zeitlichen Energieverlaufs der Äußerung (A) erkannt wird und der Teilspracherkennung (S1) unterzogen wird.

3. Verfahren nach Anspruch 1 oder 2,
wobei der erste Äußerungsteil (A1) durch eine Sprachaktivitätserkennung in der Äußerung (A) ermittelt wird und der Teilspracherkennung (S1) unterzogen wird.

4. Verfahren nach einem der vorherigen Ansprüche,
wobei mindestens einer der folgenden Verfahrensschritte durchgeführt wird:
a) Aufnehmen (T1) der Äußerung (A), welche mehrere Äußerungsteile (A1-A5) umfasst;
b) Bereitstellen des ersten Vokabulars (T2), welches eine erste Liste von Suchworten, Phonemkombinationen und/oder Übergangswahrscheinlichkeiten umfasst;
c) Durchführen der Teilspracherkennung (S1) für den ausgewählten ersten Äußerungsteil (A1) der aufgenommenen Äußerung (A) mittels dem bereitgestellten ersten Vokabular (S1) zum Bestimmen einer Auswahl von Treffern (H1-HN) aus der Liste von Suchworten;
d) Bereitstellen des zweiten Vokabulars (T4), in Abhängigkeit von der Auswahl von Treffern (H1-HN), wobei das zweite Vokabular eine Liste von Suchwortkombinationen von mehreren Suchworten, Phonemkombinationen und/oder Übergangswahrscheinlichkeiten umfasst; und
e) Durchführen der Gesamtspracherkennung (S2) für die aufgenommene Äußerung (A) mittels dem zweiten Vokabular zum Bestimmen einer Auswahl von Treffern aus der Liste von Suchwortkombinationen.

5. Verfahren nach Anspruch 4,
wobei die Auswahl von Treffern (H1-HN) aus Suchworten gebildet wird, welche wahrscheinlichsten Treffern für die Teiläußerung (A1) in dem ersten Vokabular entsprechen.

6. Verfahren nach Anspruch 4 oder 5,
wobei die Auswahl von Treffern aus Suchwortkombinationen gebildet wird, welche wahrscheinlichsten Treffern für die aufgenommene Äußerung (A) in dem zweiten Vokabular entsprechen.

7. Verfahren nach einem der vorherigen Ansprüche 4 - 6,
wobei das zweite Vokabular Suchwortkombinationen entspricht, welche durch Zuordnen von Zusatzworten und/oder Zusatzwortfolgen zu den Treffern der Teilspracherkennung (H1-HN) gebildet werden.

8. Verfahren nach einem der vorherigen Ansprüche,
wobei das Verfahren zum Erkennen von gesprochenen Einträgen einer Datenbank (4) ausgestaltet ist, wobei die Datenbank (4) hierarchisch aufgebaut ist und einem jeweiligen Oberbegriff weitere Begriffe zugeordnet sind, welchen weitere Unterbegriffe zugeordnet sind.

9. Verfahren nach Anspruch 8,
wobei der Oberbegriff einen Städtenamen, die weiteren Begriffe Straßennamen und die weiteren Unterbegriffe Hausnummern umfassen.

10. Verfahren nach einem der vorherigen Ansprüche 4 - 9,
wobei das zweite Vokabular eine Unterauswahl eines Gesamtvokabulars für die gesamte Äußerung aufweist und ausgewählte Kombinationen von Treffern aus der Liste von Suchworten des ersten Vokabulars mit weiteren Suchworten des Gesamtvokabulars aus dem zweiten Vokabular ausgeschlossen werden.

11. Verfahren nach einem der vorherigen Ansprüche 4 - 10,
wobei nach dem Durchführen der Teilspracherkennung (S1) das erste Vokabular aus einem Speicher gelöscht (T3) wird und das zweite Vokabular eingelesen wird (T4).

12. Verfahren nach einem der vorherigen Ansprüche,
wobei bei der Teilspracherkennung (S1) ermittelte Eigenschaften der Äußerung (A) und/oder des Äußerungsteils (A1), insbesondere bestimmte MFCC-Merkmale und/oder berechnete Emissionswahrscheinlichkeiten, bei der Spracherkennung (S2) der weiteren Äußerungsteile (A2-A5) und/oder der gesamten Äußerung (A) wieder verwendet werden.

13. Verfahren nach einem der vorherigen Ansprüche,
wobei der erste Äußerungsteil (A1) am Anfang der zu erkennenden Äußerung (A) steht.

14. Verfahren nach einem der vorherigen Ansprüche,
wobei zumindest Teile des zweiten Vokabulars vorkompiliert werden.

15. Verfahren nach Anspruch 10 und 14,
wobei Referenzvektoren eines Hidden-Markov-Modells für Teilvokabulare des Gesamtvokabulars berechnet und abgespeichert werden.

16. Spracherkennungsvorrichtung (1), welche derart ausgestaltet ist, dass ein Verfahren nach einem der Ansprüche 1 - 15 ausgeführt wird.

17. Spracherkennungsvorrichtung (1) nach Anspruch 16,
wobei die Spracherkennungsvorrichtung als ein Embedded System, insbesondere für den Automotivebereich, ausgeführt ist.

18. Spracherkennungsvorrichtung (1) nach Anspruch 16 oder 17,
wobei die Spracherkennungsvorrichtung (1) eine Steuereinrichtung (2) und eine Speichereinrichtung (5), welche an eine Datenbankeinrichtung (4) gekoppelt sind, wobei die Datenbankeinrichtung (4) Suchworte eines Vokabulars und/oder eine phonemische Transkription der Suchworte bereitstellt.

19. Spracherkennungsvorrichtung (1) nach einem der Ansprüche 17 - 18,
wobei die Spracherkennungsvorrichtung als Teil eines Navigationssystems, insbesondere für ein Kraftfahrzeug, ausgestaltet ist.

20. Spracherkennungsvorrichtung (1) nach einem der Ansprüche 17 - 19,
wobei die Spracherkennungsvorrichtung (1) als Teil eines Mobiltelefons und/oder einer Audiowiedergabeeinrichtung, insbesondere eines MP3-Players, ausgestaltet ist.

21. Kraftfahrzeug, insbesondere ein Automobil, welches eine Spracherkennungsvorrichtung (1) nach einem der Ansprüche 16 - 20 aufweist.

22. Computerprogrammprodukt, welches die Durchführung eines Verfahrens nach einem der Ansprüche 1 - 15 auf einer programmgesteuerten Spracherkennungsvorrichtung (1) veranlasst.

## Claims

1. A method for speech recognition of a spoken expression (A), which is to be recognized and which has a plurality of expression parts (A1-A5), which are to be recognized, wherein only a partial speech recognition (S1) is conducted initially at a first selected expression part (A1) using a first vocabulary comprising a list of search terms, and by means of a Hidden-Markov-Model, in which the remaining expression parts (A2-A5) for the speech recognition (S1) are covered by fill data, a total speech recognition (S2) is conducted at the first (A1) and further expression parts (A2-A5) of the total expression (A) depending on a selection of N best fitting hits from the list of search terms for the first expression part (A1) recognized by the partial speech recognition (S1) using a second vocabulary, wherein the second vocabulary comprises a list of search term combinations depending on the N best fitting hits.

2. The method according to claim 1,
wherein the first expression part (A1) is recognized by a determination of the temporal energy contour of the expression (A) and is subjected to the partial speech recognition (S1).

3. The method according to claim 1 or 2,
wherein the first expression part (A1) is determined by means of a speech activity recognition in the expression (A) and is subjected to the speech recognition (S1).

4. The method according to any one of the preceding claims,
wherein at least one of the following method steps is carried out:
a) recording (T1) the expression (A), which comprises a plurality of expression parts (A1-A5);
b) providing the first vocabulary (T2), which comprises a first list of search terms, phoneme combinations and/or transition probabilities;
c) conducting the partial speech recognition (S1) for the selected first expression part (A1) of the recorded expression (A) using the provided first vocabulary (S1) to determine a selection of hits (H1-HN) from the list of search terms;
d) providing the second vocabulary (T4) depending on the selection of hits (H1-HN), wherein the second vocabulary comprises a list of search term combinations of a plurality of search terms, phoneme combinations and/or transition probabilities; and
e) conducting the total speech recognition (S2) for the recorded expression (A) using the second vocabulary to determine a selection of hits from the list of search term combinations.

5. The method according to claim 4,
wherein the selection of hits (H1-HN) is formed from search terms, which correspond to most likely hits for the partial expression (A1) in the first vocabulary.

6. The method according to claim 4 or 5,
wherein the selection of hits is formed from search term combinations, which correspond to most likely hits for the recorded expression (A) in the second vocabulary.

7. The method according to any one of the preceding claims 4 - 6,
wherein the second vocabulary corresponds to search term combinations, which are formed by assigning extra words and/or extra word sequences to the hits of the partial speech recognition (H1-HN).

8. The method according to any one of the preceding claims,
wherein the method is formed to detect spoken entries of a database (4), wherein the database (4) is built hierarchically and further terms, to which further narrower terms are assigned, are assigned to a respective generic term.

9. The method according to claim 8,
wherein the generic term comprises a city name, the further terms comprise street names and the further narrower terms comprise house numbers.

10. The method according to any one of the preceding claims 4 - 9,
wherein the second vocabulary has a further selection of a total vocabulary for the total expression, and selected combinations of hits from the list of search terms from the first vocabulary with further search terms from the total vocabulary from the second vocabulary are ruled out.

11. The method according to any one of the preceding claims 4 - 10,
wherein, after conducting the partial speech recognition (S1), the first vocabulary is deleted from a memory (T3) and the second vocabulary is loaded (T4).

12. The method according to any one of the preceding claims,
wherein characteristics of the expression (A) and/or of the expression part (A1), in particular certain MFCC features and/or calculated emission probabilities, which are determined in response to the partial speech recognition (S1), are used again in response to the speech recognition (S2) of the further expression parts (A2-A5) and/or of the total expression (A).

13. The method according to any one of the preceding claims,
wherein the first expression part (A1) is located at the beginning of the expression (A), which is to be recognized.

14. The method according to any one of the preceding claims,
wherein at least parts of the second vocabulary are precompiled.

15. The method according to claim 10 and 14,
wherein reference vectors of a Hidden-Markov-Model are calculated and stored for partial vocabularies of the total vocabulary.

16. A speech recognition device (1), which is formed such that a method according to any one of claims 1 - 15 is carried out.

17. The speech recognition device (1) according to claim 16,
wherein the speech recognition device is formed as an embedded system, in particular for the automotive field.

18. The speech recognition device (1) according to claim 16 or 17,
wherein the speech recognition device (1) comprises a control device (2) and a storage device (5), which are coupled to a database device (4), wherein the database device (4) provides search terms of a vocabulary and/or a phoneme transcription of the search terms.

19. The speech recognition device (1) according to any one of claims 17 - 18,
wherein the speech recognition device is formed as a part of a navigation system, in particular for a motor vehicle.

20. The speech recognition device (1) according to any one of claims 17 - 19,
wherein the speech recognition device (1) is formed as a part of a mobile telephone and/or of an audio playback device, in particular of an MP3 player.

21. A motor vehicle, in particular an automobile, which has a speech recognition device (1) according to any one of claims 16 - 20.

22. A computer program product, which implements the conducting of a method according to any one of claims 1 - 15 on a program-controlled speech recognition device (1).

## Revendications

1. Procédé de reconnaissance vocale d'un énoncé (A) prononcé à reconnaître, lequel présente plusieurs parties d'énoncé (A1-A5) à reconnaître, sachant que d'abord seule une reconnaissance vocale partielle (S1) a lieu à l'aide d'un modèle de Markov caché dans lequel les parties d'énoncé restantes (A2-A5) pour la reconnaissance vocale partielle (S1) sont couvertes par des données de remplissage, sur une première partie d'énoncé (A1) sélectionnée, au moyen d'un premier vocabulaire avec une liste de mots de recherche et, en fonction d'une sélection reconnue par la reconnaissance vocale partielle (S1) de N meilleures réponses pertinentes de la liste de mots de recherche pour la première partie d'énoncé (A1), une reconnaissance vocale entière (S2) est exécutée sur la première partie d'énoncé (A1) et les parties d'énoncé (A2-A5) restantes de l'énoncé entier (A) au moyen d'un second vocabulaire, sachant que le second vocabulaire comprend une liste de combinaisons de mots de recherche en fonction des N meilleures réponses pertinentes.

2. Procédé selon la revendication 1,
dans lequel la première partie d'énoncé (A1) est reconnue par une détermination du parcours d'énergie temporel de l'énoncé (A) et est soumise à la reconnaissance vocale partielle (S1).

3. Procédé selon la revendication 1 ou 2,
dans lequel la première partie d'énoncé (A1) est calculée par une reconnaissance d'activité vocale dans l'énoncé (A) et est soumise à la reconnaissance vocale partielle (S1).

4. Procédé selon l'une des revendications précédentes
dans lequel au moins une des étapes de procédé suivantes est exécutée :
a) enregistrement (T1) de l'énoncé (A) qui comprend plusieurs parties d'énoncé (A1-A5) ;
b) fourniture du premier vocabulaire (T2) qui comprend une première liste de mots de recherche, de combinaisons de phonèmes et/ou de probabilités de transition ;
c) exécution de la reconnaissance vocale partielle (S1) pour la première partie d'énoncé (A1) sélectionnée de l'énoncé (A) enregistré, au moyen du premier vocabulaire (S1) fourni pour déterminer une sélection de réponses pertinentes (H1-HN) de la liste de mots de recherche ;
d) fourniture du second vocabulaire (T4) en fonction de la sélection de réponses pertinentes (H1-HN), sachant que le second vocabulaire comprend une liste de combinaisons de mots de recherche de plusieurs mots de recherche, de combinaisons de phonèmes et/ou de probabilités de transition ; et
e) exécution de la reconnaissance vocale entière (S2) pour l'énoncé (A) enregistré au moyen du second vocabulaire pour déterminer une sélection de réponses pertinentes de la liste de combinaisons de mots de recherche.

5. Procédé selon la revendication 4,
dans lequel la sélection de réponses pertinentes (H1-HN) est formée de mots de recherche qui correspondent aux réponses pertinentes les plus probables pour l'énoncé partiel (A1) dans le premier vocabulaire.

6. Procédé selon la revendication 4 ou 5,
dans lequel la sélection de réponses pertinentes est formée de combinaisons de mots de recherche qui correspondent aux réponses pertinentes les plus probables pour l'énoncé (A) enregistré dans le second vocabulaire.

7. Procédé selon l'une des revendications précédentes 4 à 6,
dans lequel le second vocabulaire correspond à des combinaisons de mots de recherche, qui sont formées par l'attribution de mots supplémentaires et/ou de suites de mots supplémentaires aux réponses pertinentes de la reconnaissance vocale partielle (H1-HN).

8. Procédé selon l'une des revendications précédentes,
dans lequel le procédé de reconnaissance d'entrées parlées est conçu à partir d'une base de données (4), sachant que la base de données (4) est construite de façon hiérarchique et que des mots supplémentaires sont attribués à un mot générique respectif, auxquels sont attribués d'autres mots subordonnés.

9. Procédé selon la revendication 8,
dans lequel le mot générique comprend un nom de ville, les autres mots comprennent des noms de rue et les autres mots subordonnés des numéros de rue.

10. Procédé selon l'une des revendications précédentes 4 à 9,
dans lequel le second vocabulaire présente une sous-sélection d'un vocabulaire entier pour l'énoncé entier, et des combinaisons sélectionnées de réponses pertinentes de la liste de mots de recherche du premier vocabulaire avec des mots de recherche supplémentaires du vocabulaire entier sont exclus du second vocabulaire.

11. Procédé selon l'une des revendications précédentes 4 à 10,
dans lequel, après exécution de la reconnaissance vocale partielle (S1), le premier vocabulaire est effacé d'une mémoire (T3) et le second vocabulaire (T4) est lu.

12. Procédé selon l'une des revendications précédentes,
dans lequel, dans la reconnaissance vocale partielle (S1), des propriétés calculées de l'énoncé (A) et/ou de la partie d'énoncé (A1), en particulier des caractéristiques MFCC déterminées et/ou des probabilités d'émission calculées, sont réemployées dans la reconnaissance vocale (S2) des autres parties d'énoncé (A2-A5) et/ou de l'énoncé (A) entier.

13. Procédé selon l'une des revendications précédentes,
dans lequel la première partie d'énoncé (A1) figure au début de l'énoncé (A) à reconnaître.

14. Procédé selon l'une des revendications précédentes,
dans lequel au moins des parties du second vocabulaire sont pré-compilées.

15. Procédé selon les revendications 10 et 14,
dans lequel des vecteurs de référence d'un modèle de Markov caché pour des vocabulaires partiels du vocabulaire entier sont calculés et sauvegardés.

16. Dispositif de reconnaissance vocale (1) qui est ainsi conçu qu'un procédé selon l'une des revendications 1 à 15 est exécuté.

17. Dispositif de reconnaissance vocale (1) selon la revendication 16,
dans lequel le dispositif de reconnaissance vocale est conçu en tant que système embarqué, en particulier pour le secteur automobile.

18. Dispositif de reconnaissance vocale (1) selon la revendication 16 ou 17,
dans lequel le dispositif de reconnaissance vocale (1) comprend un dispositif de commande (2) et un dispositif de mémoire (5), qui sont couplés à un dispositif de base de données (4), sachant que le dispositif de base de données (4) fournit des mots de recherche d'un vocabulaire et/ou une transcription phonémique des mots de recherche.

19. Dispositif de reconnaissance vocale (1) selon l'une des revendications 17 à 18,
dans lequel le dispositif de reconnaissance vocale fait partie d'un système de navigation, en particulier pour un véhicule automobile.

20. Dispositif de reconnaissance vocale (1) selon l'une des revendications 17 à 19,
dans lequel le dispositif de reconnaissance vocale (1) est conçu en tant que partie d'un téléphone mobile et/ou d'un dispositif de retransmission audio, en particulier d'un lecteur MP3.

21. Véhicule, en particulier automobile, qui présente un dispositif de reconnaissance vocale (1) selon l'une des revendications 16 à 20.

22. Produit de programme informatique, qui permet d'exécuter un procédé selon l'une des revendications 1 à 15 sur un dispositif de reconnaissance vocale (1) commandé par un programme.
